# EUROPEAN PATENT APPLICATION

(11) **EP 1 387 093 A1**
(43) Date of publication of application: **04.02.2004**
(21) Application number: 03017124.3
(22) Date of filing: 29.07.2003
(51) Int. Cl.: F16B 19/08, B21J 15/02, F16B 5/04

(54) **Self-piercing fastener, in particular self-piercing rivet**

(30) Priority: 31.07.2002 JP 2002223335
(71) Applicant: Newfrey LLC, Newark, Delaware 19711 (US)
(72) Inventor: Kato Toru, Noyori-cho,Toyohashi-shi,Aichi-ken (JP); Umemura Hironori, Noyori-cho,Toyohashi-shi,Aichi-ken (JP); Naitoh Nobuharu, Noyori-cho,Toyohashi-shi,Aichi-ken (JP); Igushi Hiroyuki, Aichi 471-8572 (JP); Aono Masamichi, Aichi 471-8572 (JP); Inamori Shigeru, Aichi 471-8572 (JP); Yoshihara Shinji, chi,Shimonoseki-shi Yamaguchi 752-0953 (JP); Iwase Tetsu c/o Kobe Steel Ltd., Fujisawa-shi,Kangawa251-0014 (JP); Watari Mahito, Nakamura-ku Nagoya Aichi 450-0003 (JP); Umemoto Shunichi, Shinagawa-ku,Tokyo 141-8688 (JP); Nakamura, Takashi c/o Toyota Jidosha K.K., Aichi 471-8572 (JP)
(74) Representative: Haar, Lucas H., Dipl.-Ing.

(57) **Abstract**

A self-piercing rivet comprises a flange (15) with a large diameter and a shank (17) with a hollow cavity (16) extending from the flange inward. The rivet is made of aluminum or an aluminum alloy. The shank (17) is a straight cylinder with outer diameter D1, and the hollow cavity (16) in the shank has conical section (21) tapered from the shank end and converging towards the flange at angle α and a straight cylinder section (22) with inner diameter D2 extending from the conical section (21) to the end on the flange side. The shank has a substantially flat ring-shaped (24) end with outer diameter D1 and radial length T1. The angle α of the conical section ranges between 70° and 110°.

## Description

The present invention relates to a self-piercing fastener, in particular a self-piercing rivet, in which the fastener comprises a flange with a large diameter and a shank with a hollow cavity extending from the flange inward, in which the end of the shank pierces a plurality of workpieces. The self-piercing fastener becomes deformed and expands outwardly in the radial direction, remaining inside the final workpiece without passing through. The expanded shank and the flange are interposed between the plurality of workpieces, joining the workpieces together.

When a self-piercing rivet is driven into workpieces such as two body panels by the punch and die of a fastening device, the shank of the rivet passes through the workpieces and the end of the shank expands. The expanded shank and the large-diameter flange then hold the workpieces together. Self-piercing rivets are used to join aluminum body panels together because welding cannot be used. Because aluminum body panels are increasingly used to reduce the weight of automobiles, demand for self-piercing rivets has grown. The shank of a self-piercing rivet is driven into workpieces by a punch without first opening holes in the workpieces. The shank of the self-piercing rivet passes through the workpieces on the punch side but does not pass through the final workpiece adjacent to the die. Instead, the end remains inside the workpieces. In other words, the shank of the rivet does not make a hole in the surface of the final workpiece adjacent to the die. As a result, the final workpiece is sealed against damage from air and water, and the external appearance of the final workpiece is protected.

A self-piercing rivet is disclosed in the specification of U.S. Patent No. 6,325,584, in which the rivet comprises a flange with a large diameter and a shank with a hollow cavity extending from the flange inward, in which the end of the shank pierces a plurality of workpieces, becomes deformed and expands outwardly in the radial direction, remaining inside the final workpiece without passing through, in which the expanded shank and the flange are interposed between the plurality of workpieces, joining the workpieces together, and in which the rivet is made of aluminum or an aluminum alloy. The end of the shank in this self-piercing rivet has a flat ring-shaped surface that is not sharp. The hollow cavity inside the shank is also conical and converges at a 50 to 60° angle from the end of the shank. A self-piercing rivet with this shape as described in the U.S. patent application process does not become crumpled when driven into workpieces and is less likely to pass through the final workpiece.

When the workpiece on the punch side is thicker than the final workpiece adjacent to the die in the driving direction of the rivet from the punch, the shank of the self-piercing rivet passes through the final workpiece at an angle, and the radial penetrating length or "undercut" is small. As a result, the workpiece on the punch side is not attached with sufficient strength in the final workpiece. In other words, the self-piercing rivet disclosed in U.S. Patent No. 6,325,584 leaves room for improvement in terms of joining strength.

The purpose of the present invention is to provide a self-piercing fastener able to obtain sufficient undercut. The present invention achieves this purpose by providing a self-piercing fastener, especially a self-piercing rivet, wherein the rivet comprises a flange with a large diameter and a shank with a hollow cavity extending from the flange inward, wherein the end of the shank pierces a plurality of workpieces. The flange becomes deformed and expands outwardly in the radial direction, remaining inside the final workpiece without passing through, wherein the expanded shank and the flange are interposed between the plurality of workpieces, joining the workpieces together. The rivet has a shank which is a straight cylinder with outer diameter D1, wherein the hollow cavity in the shank has conical section tapered from the shank end and converging towards the flange at angle α and a straight cylinder section with an inner diameter D2 extending from the conical section to the end on the flange side. The shank has a substantially flat ring-shaped end with outer diameter D1 and radial length T1, and wherein the angle α of the conical section ranges between 70° and 110°.

Because the shank is a straight cylinder with a conical hollow cavity tapered from the shank end and converging towards the flange at an angle between 70° and 110°, and the shank has a substantially flat ring-shaped end with radial length T1 and an outer diameter the same as the outer diameter of the shank. The rivet pierces the workpieces without becoming crumpled. In the final workpiece, the end of the shank becomes deformed and expands outwardly in the radial direction, remaining inside the workpieces without passing through. In the final workpiece with the shank end, the piercing length in the radial direction or the amount of undercut is sufficiently large, and the final workpiece is joined to the other workpiece on the punch side with sufficient strength.

In the self-piercing rivet of the present invention, the thickness T2 (D1-D2) of the shank at the straight cylinder section of the hollow cavity is 25 to 45% of the outer diameter D1 of the shank. This thickness ensures that the self-piercing rivet is strong enough. Also, the axial length (thickness) of the flange in the self-piercing rivet of the present invention is 5 to 20% of the outer diameter D1 of the shank. This keeps the flange from rebounding in the driving direction and reduces the degree to which the flange protrudes from the surface of the workpiece. The entire length of the shank is the sum of the overall thickness of the workpieces and the die thickness of the rivet fastening device. If the shank is too long, the bottom surface of the flange does not remain attached, and the durability of the joint decreases. If the shank is too short, there is less undercut and the shank is more likely to split. In addition, the entire length of the hollow cavity in the shank should be 70% or more of the overall thickness of the workpieces, the radial length T1 of the end surface of the shank should range between 0.2 mm and 0.6 mm, and the entire rivet should be heat treated to prevent stress corrosion.

In one embodiment of the invention, a method of inserting a rivet of the present invention is disclosed. Particularly, the self-piercing rivet is driven into workpieces, the temperature of the self-piercing rivet should be less than -100°C. When the temperature of the self-piercing rivet is -100°C or lower, it can be driven into thicker workpieces than at room temperature.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

Figure 1 is a cross-sectional view of a self-piercing rivet of the present invention; and

Figure 2 is a cross-sectional view of the self-piercing rivet in FIG 1 inserted and fastened into a workpiece.

The following description of the preferred embodiments is merely exemplary in nature and is in no way intended to limit the invention, its application, or uses.

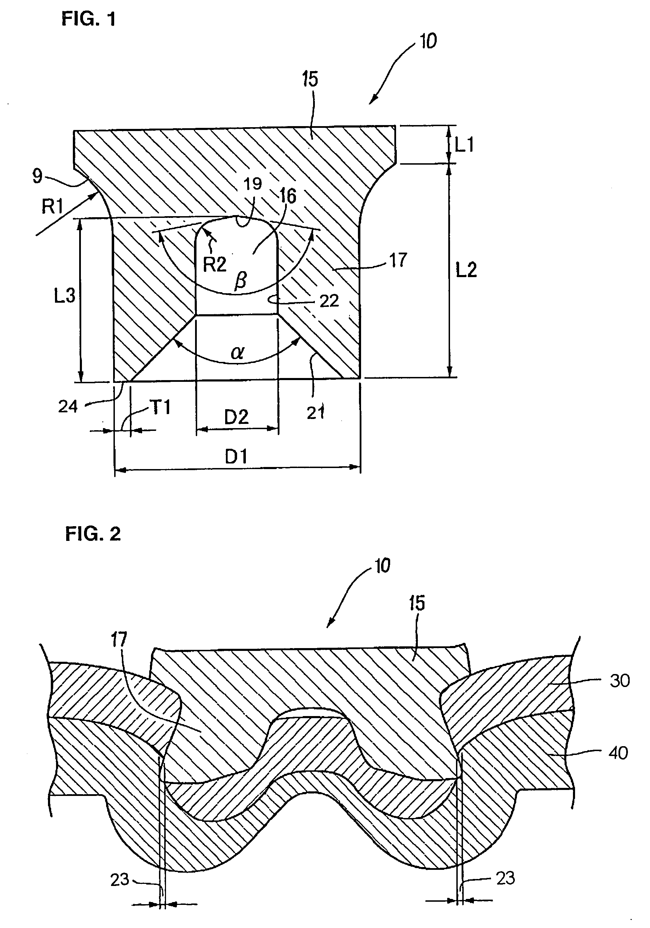

The following is an explanation of an embodiment of the present invention with reference to the drawings. Figure 1 is a cross-sectional view of a self-piercing rivet 10 of the present invention. Figure 2 shows a self-piercing rivet 10 with this configuration driven into two workpieces 30, 40 using a fastening device common to the art with a punch and die as described in the specification of U.S. Patent No. 6,325,584. It is envisioned workpieces 30, 40 are aluminum automobile body panels, aluminum-magnesium (A500) alloy or aluminum-magnesium-silicon (A6000) alloy. The workpiece 40 is the workpiece adjacent to the die (not shown). It is the final workpiece to be penetrated by the self-piercing rivet 10. The self-piercing rivet 10 does not pass completely through the final workpiece 30.

In Figure 1, the self-piercing rivet 10 comprises a flange 15 with a large diameter and a shank 17 with a hollow cavity 16 extending from the flange 15 inward. The entire self-piercing rivet 10 is preferably made of aluminum or an aluminum alloy, but can equally be iron alloy for use with steel sheet metal workpieces. In the test, it was made of an aluminum-zinc (A7000) alloy which is ideal for use in fastening aluminum automobile body panels together. Here, the self-piercing rivet 10 is heat treated to prevent stress fractures and corrosion. The shank 17 is cylindrical with an outer diameter of D1. In the test, the outer diameter D1 of the shank 17 was 6 mm. The present invention is not limited to this number. This is used merely for illustration purposes. Similarly, the present invention is not limited to the numbers used for the other components. Again, these are used merely for illustration purposes. The flange 15 has an outer diameter greater than the outer diameter D1 of the shank. In the test, it was 7.8 mm. The boundary between the bottom surface of the flange 15 and the shank 17 forms a curved surface 19 smoothly from the flange 15 to the shank 17. In other words, the transition from the flange 15 to the shank 17 is smooth and continuous. Even though the flange 15 is deformed by the punch (not shown) when the self-piercing rivet 10 is driven into the workpieces, the rivet flows smoothly into the workpieces because of this shape. Preferably, the curvature radius R1 of the curved surface 9 was 2 mm.

In the present invention, the hollow cavity 16 in the shank 17 has conical section 21 tapered from the shank end (the bottom end of the shank 17 in Figure 1) and converging towards the flange 15 at angle α and a straight cylinder section 22 with inner diameter D2 extending from the conical section 21 to the end on the flange 15 side. The angle α of the conical section 21 ranges between 70° and 110°. An angle in this range allows the end of the shank to expand outward radially, so the shank does not pass through the final workpiece but remains inside. In the test, the angle was 90°. The inner diameter D2 of the straight cylindrical section 22 determines the thickness of the shank 17 in this section. This point is described in greater detail below. The shank has a substantially flat ring-shaped end 24 with outer diameter D1 and radial length T1. The radial length T1 of the flat ring-shaped end 24 ranges between 0.2 and 0.6 mm (3 to 10% of the outer diameter D1 of the shank). The shape of the end should be as sharp (pointed) as possible. For the purposes of reliable fastening, the radial length T1 of the end 24 was set at 0.3 mm in the test.

Optionally, the self-piercing rivet has a thickness T2 (shank outer diameter D1 - hollow cavity inner diameter D2) of the shank 17 at the straight cylinder section 22 of the hollow cavity 16 is 25 to 45% of the outer diameter D1 of the shank. This thickness ensures that the aluminum self-piercing rivet is strong enough. In the test, the inner diameter T2 was 2.1 mm and the hollow cavity inner diameter D2 was 2 mm. The upper end or curved surface 19 of the hollow cavity 16 should form a concave surface along wide angle β so as to continue along the cylindrical inner wall at curvature radius R2. This makes it strong enough to resist fracturing when driven in.

In the test, angle β was 160° and curvature radius R2 was 0.5 mm. Also, the axial length (thickness) L1 of the flange is 15 to 20% of the outer diameter D1 of the shank. This keeps the flange from rebounding in the driving direction and reduces the degree to which the flange 15 protrudes from the surface of the workpiece 30. In the test, this was set at 0.9 mm. Here, the entire length L2 of the shank 17 is the sum of the overall thickness of the workpieces 30, 40 and the die thickness (not shown) of the rivet fastening device. If the shank 17 is too long, the bottom surface of the flange 15 does not remain attached to the surface of the workpiece 30, and the durability of the joint between the workpieces 30, 40 decreases. If the shank 17 is too short, there is less undercut 23 and the shank 17 is more likely to split. In addition, the entire length L3 of the hollow cavity 16 in the shank 17 should be 70% or more of the overall thickness of the workpieces 30, 40.

When a fastening die protruding from the center is used, the gap between the center of the die and the upper end 25 of the hollow cavity 16 should be longer than the thickness of the bottom workpiece. In the test, the entire length L3 of the hollow cavity 16 was 4 mm. The intersecting section between the bottom end of the conical section 21 and the ring-shaped flat end 24, as shown in Figure 1, should be angular. Ideally, it should be a concave curve. This reduces the resistance to the flow in the workpieces when the self-piercing rivet is driven in and improves the fastening effect.

A self-piercing rivet 10 with this configuration is driven into a plurality of workpieces 30, 40 using a fastening device common to the art with a punch and die as described in the specification of U.S. Patent No. 6,325,584. The end of the shank 17 is driven into the plurality of workpieces 30, 40. The shank 17 passes into the workpieces, and the section corresponding to the conical section 21 of the hollow cavity 16 at the end of the shank 17 expands outward radially, and the ring-shaped flat end 24 of the shank does not pass through the workpiece adjacent to the die or the final workpiece but remains inside. The plurality of workpieces are interposed between to expanded shank and flange 15 and thus joined together securely. Figure 2 shows this self-piercing rivet 10 joining the two workpieces 30, 40 together. In the test, the end of the shank 17 on the self-piercing rivet 10 expanded outward radially and ate into the final workpiece 40 with an undercut 23. As a result, the workpieces 30, 40 were joined together properly and securely.

When the self-piercing rivet is driven into workpieces, the temperature of the self-piercing rivet optionally can be less than -100°C. When the temperature of the self-piercing rivet is -100°C or lower, it can be driven into thicker workpieces than at room temperature.

In the self-piercing rivet of the present invention, the hollow cavity in the straight cylinder shank has conical section tapered from the shank end and converging towards the flange at angle between 70° and 110° and a straight cylinder section extending from the conical section to the end on the flange side, and the shank has a substantially flat ring-shaped end with an outer diameter the same as the outer diameter of the shank. As a result, the rivet pierces the workpieces without becoming crumpled. In the final workpiece, the end of the shank becomes deformed and expands outwardly in the radial direction, remaining inside the workpiece without passing through. In the final workpiece with the shank end, the piercing length in the radial direction or the amount of undercut is sufficiently large, and the final workpiece is joined to the other workpiece on the punch side with sufficient strength. Because the self-piercing rivet of the present invention is made of aluminum or an aluminum alloy, it can be discarded and recycled without having to be separated from the aluminum automobile body.

The description of the invention is merely exemplary in nature and, thus, variations that do not depart from the gist of the invention are intended to be within the scope of the invention. Such variations are not to be regarded as a departure from the spirit and scope of the invention.

## Claims

1. A self-piercing fastener, in particular a self-piercing rivet, for coupling a plurality of workpieces comprising:
a cylindrical shank body defining a hollow cavity, said cavity defining a conical tapered section having an angle between about 70° and about 110°, said cavity further defining an upper end defining a concave surface.

2. The self-piercing fastener according to Claim 1, wherein the concave surface defines an interior angle of about 160°.

3. The self-piercing fastener according to anyone of the preceding claims, wherein the shank further comprises a flat ring-shaped end surface adjacent the conical tapered section.

4. The self-piercing fastener according to anyone of the preceding claims, wherein the shank defines a thickness between a shank outer surface and a shank inner surface, the thickness being between about 20% to about 45% of an outer diameter of the shank outer surface.

5. The self-piercing fastener according to anyone of the preceding claims, wherein the fastener is an iron alloy.

6. A self-piercing fastener according to anyone of the preceding claims comprising:
a flange;
a shank having a body with an outer radius smaller than a radius of the flange, the shank defining a hollow cavity, the shank having a conical tapered section having an angle between 70° and 110°.

7. The self-piercing fastener according to anyone of the preceding claims, wherein the hollow cavity has a diameter of 25 to 45% of the outer radius.

8. The self-piercing fastener according to anyone of the preceding claims, wherein the axial length of the flange is 5 to 20of the outer diameter of the shank.

9. The self-piercing fastener according to Claim 3, wherein the radial length of the end surface of the shank is between about 0.2 and 0.6 mm.

10. The self-piercing fastener according to anyone of the preceding claims, wherein the pair of workpieces have a first thickness and wherein the cavity has a length of the 70% of the first thickness.

11. A self-piercing fastener according to anyone of the preceding claims comprising:
a flange with a first diameter and a shank with a hollow cavity extending from the flange, wherein the shank is a straight cylinder with outer diameter smaller than the first diameter, the shank defining a hollow cavity, and a conical section tapered from a shank end and converging towards the flange at angle α and a straight cylinder section with an inner diameter extending from the conical section, wherein the shank has a substantially flat ring-shaped end surface with an outer diameter and radial length, and wherein the angle α of the conical section ranges between about 70° and about 110°.

12. The self-piercing fastener in accordance with Claim 11, wherein the thickness of the shank at the straight cylinder section of the hollow cavity is 25 to 45% of the outer diameter of the shank.

13. The self-piercing fastener according to anyone of the preceding claims, wherein the entire length of the shank is the sum of the overall thickness of the workpieces and a die thickness of the rivet fastening device.

14. The self-piercing fastener according to anyone of the preceding claims, wherein the entire length of the hollow cavity in the shank is greater than 70% of the overall thickness of the workpieces.

15. The self-piercing fastener in accordance with Claim 14, wherein the radial length of the end surface of the shank is between 0.2mm and 0.6mm.

16. The self-piercing fastener according to anyone of the preceding claims, wherein the entire fastener is heat treated to prevent stress corrosion.

17. A method of coupling a pair of workpieces comprising:
providing a fastener having a flange with a large diameter and a shank with a hollow cavity extending from the flange, wherein the shank is a straight cylinder with outer diameter defining a hollow cavity, the shank defining a conical section tapered from a shank end and converging towards the flange at angle α and a straight cylinder section with inner diameter extending from the conical section to an end on the flange side, wherein the shank has a substantially flat ring-shaped end with outer diameter and radial length, and wherein the angle α of the conical section ranges between 70° and 110°; and
striking the fastener so as to deform and expand the shank outwardly in a radial direction.

18. The method according to Claim 17, wherein the fastener is an aluminum alloy.

19. The method according to Claim 18, wherein the fastener is an aluminum-zinc alloy.

20. The method according to anyone of the Claims 17 to 19, further including reducing the temperature of the fastener to less than -100°C.

21. The method according to anyone of the Claims 17 to 20, wherein striking the fastener is striking the fastener so as to form an undercut.
